# FASCICULE DE BREVET EUROPEEN

(11) **EP 3 562 690 B1**
(45) Date de publication et mention de la délivrance du brevet: **02.09.2020**
(21) Numéro de dépôt: 17829253.8
(22) Date de dépôt: 19.12.2017
(51) Int. Cl.: B60C 11/03, B60C 11/12

(54) **BANDE DE ROULEMENT POUR PNEU DE VÉHICULE POIDS LOURD**
LAUFFLÄCHE FÜR EINEN SCHWERLASTFAHRZEUGREIFEN
TREAD FOR A HEAVY GOODS VEHICLE TYRE

(30) Priorité: 28.12.2016 FR 1663455
(43) Date de publication de la demande: 06.11.2019
(73) Titulaire: Compagnie Générale des Etablissements Michelin, 63000 Clermont-Ferrand (FR)
(72) Inventeur: ZIVKOVIC, Tony, 63040 Clermont Ferrand Cedex 9 (FR); LARREGAIN, Arnaud, 63040 Clermont Ferrand Cedex 9 (FR)
(74) Mandataire: Millanvois, Patrick Jacques Jean
(86) Numéro de dépôt international: PCT/FR2017/053702
(87) Numéro de publication internationale: WO 2018/122497

(56) Documents cités:
- WO-A1-2015/114129
- FR-A1- 2 940 185
- FR-A1- 2 971 732

## Description

### DOMAINE DE L'INVENTION

L'invention concerne une bande de roulement pour pneu de véhicule poids lourd.

### ÉTAT DE LA TECHNIQUE

De façon connue, des conditions de roulage par temps de pluie requièrent une élimination la plus rapide possible de l'eau entre la bande de roulement de chaque pneu et la chaussée afin d'assurer le contact de la bande de roulement avec la chaussée. L'eau qui n'est pas repoussée sur l'avant du pneu s'écoule en partie dans les rainures et les incisions formées dans la bande de roulement du pneu que ces rainures et incisions soient orientées dans la direction circonférentielle ou la direction transversale ou encore dans une direction oblique.

### Définitions

Par découpure, on entend toute cavité ou creux réalisé notamment par moulage dans une bande de roulement, cette découpure s'étendant à la fois selon une direction principale qui est la direction d'écoulement de l'eau dans la découpure par temps de pluie et dans la profondeur de la bande de roulement.

Par rainure, on entend ici une découpure s'ouvrant sur une surface de roulement destinée à être en contact avec la chaussée, cette découpure ayant une largeur moyenne appropriée pour que les parois de matière qui le délimitent ne soient jamais en contact l'une avec l'autre dans les conditions normales d'usage du pneu.

Par incision, on entend ici une découpure mince ayant une largeur moyenne faible et telle que, sous les conditions normales d'usage du pneu, les parois de matière la délimitant puissent venir, au moins partiellement, en contact l'une sur l'autre lors du passage dans la région de contact avec la chaussée.

Par rainure cachée, on entend une cavité ou un canal formé au moins en partie sous la surface de roulement à neuf, cette cavité cachée ou canal caché étant destiné à former une nouvelle rainure ouverte sur la surface de roulement après une usure partielle prédéterminée. Une rainure cachée est délimitée par deux parois latérales en vis-à-vis, ces deux parois latérales étant reliées entre elles par une partie inférieure formant un fond reliant les deux parois radialement vers l'intérieur et par une partie supérieure dans le prolongement de ces parois radialement vers l'extérieur. Dans cette partie supérieure peut s'ouvrir une incision reliant la rainure cachée à la surface de roulement à neuf.

Par épaisseur de matière à user, on entend l'épaisseur de bande de roulement pouvant être usée en roulage avant d'atteindre la limite légale d'usage pouvant être indiquée par des indicateurs d'usure formés notamment dans les rainures.

Dans la présente description, on utilise les termes radial ou radialement pour indiquer une direction qui, lorsqu'elle est prise sur le pneu, est une direction perpendiculaire à l'axe de rotation du pneu tandis que, lorsqu'elle est prise sur une bande de roulement seule, elle correspond à la direction de l'épaisseur de ladite bande. Par ailleurs on utilise le terme circonférentiel pour indiquer une direction qui, correspond à une direction tangente à tout cercle centré sur l'axe de rotation du pneu. Cette même direction correspond à la direction longitudinale de la bande de roulement celle-ci étant formée à la manière d'une bande plane avant incorporation à la fabrication d'un pneu.

Quelle que soit la catégorie de pneu (c'est-à-dire que ce soit un pneu équipant un véhicule de tourisme ou un véhicule de type poids lourd destiné à porter de lourdes charges), la bande de roulement doit présenter une performance en drainage de l'eau présente sur la route qui est toujours au-dessus d'une performance minimale dite performance de sécurité. En conséquence et compte tenu de l'usure progressive de la bande de roulement qui réduit progressivement les surfaces de sections transversales des rainures et par conséquent la capacité de ces rainures à évacuer un volume de liquide, il est usuel de réaliser des rainures débouchant sur la surface de roulement à l'état neuf et se prolongeant dans l'épaisseur de la bande jusqu'à au moins un niveau qui correspond à une limite légale nécessitant le retrait de la bande.

La réalisation d'une pluralité de rainures s'ouvrant à neuf sur la surface de roulement d'une bande de roulement a pour inconvénient de réduire la quantité de matière de bande pour une largeur donnée de bande et en conséquence d'affecter sensiblement les rigidités de la bande de roulement et la performance en usure. Il en résulte que pour faire face aux sollicitations subies par la bande lors d'un roulage, la personne du métier doit prévoir de compenser ces diminutions de rigidité par tout moyen à sa disposition notamment en adaptant la structure interne du pneu ce qui, bien entendu, n'est pas sans incidence sur le prix de revient du pneu lui-même. Ces diminutions de rigidité peuvent en outre affecter la vitesse d'usure, la régularité de cette usure et certaines des performances attendues en roulage.

Par ailleurs, on constate une augmentation de la résistance au roulement, ce qui se traduit par une augmentation sensible de la consommation des véhicules équipés de tels pneus, résultant d'une augmentation des pertes hystérétiques liées aux cycles de déformations de la matière caoutchoutique dont est formée la bande de roulement.

Il a été proposé dans le document EP2483087-B1 de former dans une bande de roulement des rainures ayant la particularité de s'ouvrir de manière discontinue sur la surface de roulement de la bande à l'état neuf. Cette rainure peut être considérée comme étant une rainure ondulante dans l'épaisseur de la bande en s'ouvrant régulièrement sur la surface de roulement. Ce type de rainure ondulante dans la direction de l'épaisseur d'une bande de roulement peut être formé que ce soit dans la direction circonférentielle ou dans toute autre direction. Comme décrit dans cette publication, ce type de rainure est à l'état initial (correspondant à l'état neuf de la bande) continu ce qui permet d'assurer, en roulage sur chaussée revêtue d'eau, une capture de l'eau dans les parties de rainure s'ouvrant sur la surface de roulement lors du passage dans le contact avec la chaussée, l'eau ainsi captée étant drainée dans la rainure ondulante sous la surface de roulement. Le liquide ainsi capté est ensuite éjecté en dehors de la région de contact sous l'effet des forces centrifuges. Ce même document décrit la possibilité, à l'image des dessins de sculpture antérieurs, de réaliser des connexions entre au moins deux rainures ondulantes de ce type.

Il existe d'autres documents, tel notamment EP 2323858 B1, qui préconisent la formation de creux cachés formés entièrement sous la surface de roulement de la bande de roulement à neuf. Ce type de pneu permet de renouveler du volume de drainage lorsque la bande a atteint un niveau d'usure prédéterminé.

Dans toutes ces solutions, il a été constaté qu'avant la formation de nouvelles rainures, il peut apparaître une usure localisée, cette usure pouvant être qualifiée d'irrégulière dès lors qu'elle ne se produit pas de manière uniforme sur l'ensemble de la bande de roulement. Ceci peut s'expliquer par le fait que la partie de matière radialement entre chaque cavité cachée et la surface de roulement est moins rigide que le reste.

Le document EP1015261 B1 avait proposé une solution pour faire apparaitre de façon quasi instantanée une nouvelle rainure à partir d'une cavité cachée. Ce moyen consiste en la présence de deux petites rainures de découpe, formées sur la partie supérieure de la cavité, ces petites rainures de découpe étant continues dans la direction principale de la cavité cachée. Ces petites rainures de découpe s'étendent radialement vers la surface de roulement au-delà de la paroi supérieure délimitant la cavité. Lorsque le niveau d'usure atteint ces rainures de découpe, la partie supérieure de la cavité se détache instantanément de la bande de roulement en mettant ainsi la rainure à jour. Toutefois si cette disposition permet de former rapidement une nouvelle rainure, elle ne permet pas d'éviter une usure irrégulière avant que la partie supérieure ne soit totalement détachée de la bande. De plus, cette disposition peut générer quelques difficultés de démoulage du pneu lors de sa fabrication.

Il est en outre mentionné les documents de l'état de la technique suivants : FR 2971732 A1, WO 2015/114129 A1, FR 2940185 A1.

### BREF EXPOSE DE L'INVENTION

La présente invention s'attache à proposer une solution à ce problème d'usure irrégulière pouvant intervenir avant qu'une nouvelle rainure soit formée par l'ouverture d'un canal caché sous la surface de roulement.

À cet effet, l'invention a pour objet une bande de roulement pour pneu de véhicule poids lourd telle que couverte par la revendication indépendante 1.

Avantageusement, ces fines nervures s'étendent selon une direction faisant un angle au moins égal à 40 degrés avec la direction principale de l'au moins une cavité cachée.

La direction principale d'une cavité cachée étant la direction de plus grande dimension de la cavité cachée et correspondant à la direction d'écoulement d'un liquide à l'intérieur de cette cavité cachée lorsqu'elle est ouverte sur la surface de roulement et forme une nouvelle rainure.

Avantageusement, la hauteur maximale t des fines nervures est choisie en fonction de la hauteur Hc de la cavité cachée, cette hauteur maximale t pouvant être fixée au préalable en fonction de l'épaisseur de matière à user de la bande de roulement. La hauteur maximale t des fines nervures est adaptée en fonction de la hauteur Hc de la cavité cachée. Préférentiellement, la hauteur maximale t des fines nervures est au moins égale à 1 mm et au plus égale à 5 mm.

Dans une variante de l'invention, les fines nervures formées sur la partie sommitale délimitant l'au moins une cavité cachée sont orientées avec un angle proche ou égal à 90 degrés avec la direction principale de l'au moins une cavité cachée.

Dans une variante de l'invention, les fines nervures se prolongent sur une partie d'au moins une des parois latérales délimitant l'au moins une cavité cachée. Préférentiellement les fines nervures s'étendent le long d'au moins une des parois latérales de l'au moins une cavité cachée sur une hauteur h au moins égale à 1.5 mm et au plus égale à 3 mm.

Dans une autre variante de l'invention, l'au moins une cavité cachée est prolongée radialement jusqu'à la surface de roulement à neuf par une incision et la partie sommitale de l'au moins une cavité cachée comprend de chaque côté de l'incision une face plane inclinée d'un angle G plus grand que zéro et au plus égal à 45 degrés, cet angle G étant mesuré par rapport à une direction parallèle à la direction transversale.

Grâce à cette invention, il est possible de modifier localement la rigidité de la bande de roulement au voisinage de chaque cavité cachée dans une phase d'usure assez proche de la formation d'une nouvelle rainure. Cette modification locale de rigidité assure un meilleur comportement en usure et il est ainsi possible d'obtenir un profil d'usure de la bande de roulement plus régulier avant l'apparition d'une nouvelle rainure comparativement à une même bande de roulement dépourvue de fines nervures telles que définies.

D'autres caractéristiques et avantages de l'invention ressortent de la description faite ci-après en référence aux dessins annexés qui montrent, à titre d'exemple non limitatif, une forme de réalisation de l'objet de l'invention.

### BREVE DESCRIPTION DES FIGURES

La figure 1 montre une vue partielle du bord d'une bande de roulement comprenant une pluralité de canaux formés entièrement sous la surface de roulement à neuf, ces canaux étant orientés transversalement c'est à dire de façon parallèle à l'axe de rotation du pneu pourvu de cette bande de roulement ;
La figure 2 montre une coupe selon un plan contenant l'axe de rotation et dont la trace est indiquée par la ligne II-II sur la figure 1 ;
La figure 3 montre une variante de canal caché selon l'invention prolongé vers la surface de roulement par une incision et comprenant une pluralité de fines nervures formées sur la partie supérieure du canal caché ;
La figure 4 montre une variante de l'invention appliquée à une rainure ondulante comportant une succession de parties ouvertes sur la surface de roulement à neuf et de parties cachées.

### DESCRIPTION DES FIGURES

Les exemples décrits ci-après sont relatifs à des pneus de véhicule poids lourd de dimension 315/70R22.5. Ils peuvent aisément être transposés à des pneus pour poids lourd de dimensions différentes.

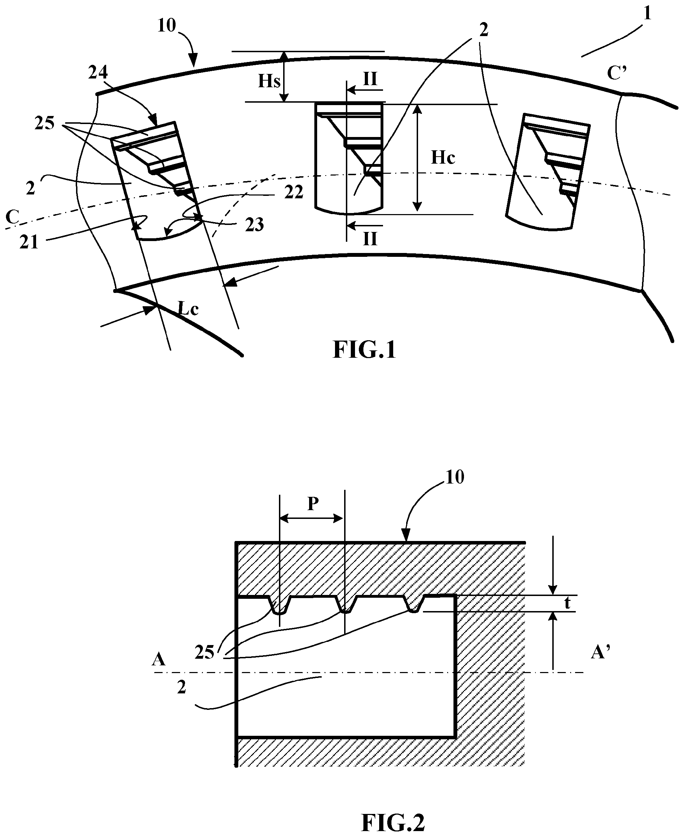

La première variante illustrant l'invention est montrée avec la figure 1 et concerne une bande de roulement 1 d'un pneu pour poids lourd, cette bande de roulement 1 ayant à neuf une surface de roulement 10 destinée à venir en contact avec une chaussée. Cette bande de roulement 1 comprend des canaux cachés 2 sous la surface de roulement 10 et destinés à former après une usure partielle de la bande de nouvelles rainures ouvertes sur la surface de roulement. Ces canaux cachés 2 sont dans le cas présent orientés transversalement c'est à dire selon une direction correspondant à la direction transversale ou axiale d'un pneu pourvu de cette bande de roulement. La direction transversale se confond avec l'axe de rotation du pneu.

Comme cela est visible sur la figure 1, ces canaux cachés 2 s'ouvrent vers l'extérieur sur les bords latéraux de la bande de roulement 1. Chaque canal caché 2 comprend deux parois latérales 21, 22 se faisant face, la distance entre ces parois latérales définissant la largeur Lc du canal. Ces parois latérales 21 et 22 sont reliées entre elles par un fond de canal 23 dans la partie la plus à l'intérieur de la bande de roulement et par une partie sommitale 24 dans la partie la plus proche de la surface de roulement 10.

Sur chacun des canaux 2 et sur la partie sommitale 24 on trouve une pluralité de fines nervures 25 de hauteur maximale t égale à 4 mm, ces fines nervures 25 étant orientées perpendiculairement par rapport à la direction principale des canaux 2. Dans le cas présent la direction principale des canaux correspond à la direction transversale ou axiale sur la bande de roulement, cette dernière direction correspondant à la direction perpendiculaire au plan de la figure 1.

Chaque canal 2 est situé sous la surface de roulement 10 de la bande de roulement 1 à une distance Hs égale dans le cas présent à 5 mm et a une hauteur totale Hc égale dans le cas de l'exemple à 8 mm. L'épaisseur de matière à user de la bande de roulement correspond sensiblement à la somme des hauteurs Hs et Hc. La largeur Lc du canal caché 2 est égale à 6 mm

Sur la figure 2, on montre une coupe de la bande de roulement montrée avec la figure 1 réalisée dans un plan de coupe radial c'est à dire un plan contenant l'axe de rotation du pneu. Dans ce plan de coupe on voit que la paroi supérieure délimitant la cavité cachée 2 comprend une pluralité de fines nervures de hauteur maximale t égale dans l'exemple décrit à 2 mm, ces fines nervures étant disposées de manière régulière avec un pas P. Ces fines nervures ont une largeur maximale égale à 1.5 mm. La distance P entre les fines nervures est comprise entre une fois et cinq fois la largeur maximale Lc de la cavité cachée 2.

Les fines nervures sont orientées perpendiculairement au plan de la figure 2 c'est à dire perpendiculairement à la direction principale de la cavité cachée 2 (cette dernière étant indiquée par la direction AA' sur la figure 2).

Dans une variante non montrée ici, les fines nervures peuvent être orientées obliquement pour former un angle inférieur à 90 degrés. Préférentiellement cet angle est au moins égal à 45 degrés.

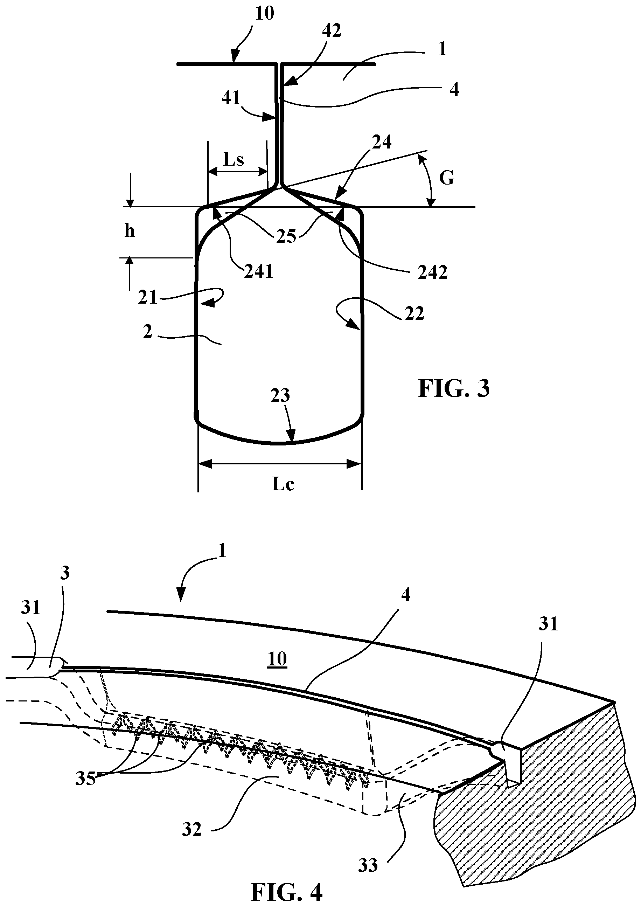

La figure 3 montre une variante de l'invention selon laquelle un canal 2 est prolongé vers la surface de roulement 10 par une incision 4. Dans cette variante, la partie sommitale 24 du canal 2 est subdivisée de part et d'autre de l'incision 4 en deux parties sommitales 241, 242. Chacune de ces parties sommitales 241, 242 est inclinée selon un angle G égal dans l'exemple à 15 degrés de manière à former entre elle un angle de 150 degrés. Sur chacune de ces parties sommitales 241, 242, il est en outre formé une pluralité de fines nervures 25 orientées transversalement. Ces fines nervures 25 font un angle de 90 degrés avec la direction principale de la cavité cachée correspondant à la direction perpendiculaire au plan de la figure 3. Ces fines nervures 25 se prolongent sur une hauteur h le long des faces latérales 21, 22 délimitant la cavité 2. Cette hauteur h est dans le cas présent égale à 2 mm.

La combinaison de la présence d'une pluralité de fines nervures 25 et de l'inclinaison G des parties sommitales 241, 242 est particulièrement efficace sur le faciès de l'usure avant la formation de nouvelles rainures ouvertes sur la surface de roulement.

La troisième variante montrée avec la figure 4 concerne une bande de roulement 1 pour pneu de véhicule poids lourd de dimension 315/70R22.5.

Cette bande de roulement comporte dans son épaisseur au moins une rainure dite ondulante, cette rainure ondulante 3 comportant une alternance de parties de rainures ouvertes 31 sur la surface de roulement à neuf 10 et de cavités cachées 32 destinées à s'ouvrir sur la surface de roulement après une usure prédéterminée pour former de nouvelles rainures. Ces parties de rainure ouvertes 31 et de cavités cachées 32 sont reliées entre elles par des parties de liaison 33 assurant une continuité à neuf de l'écoulement de fluides dans la rainure ondulante, cet écoulement se faisant selon la direction principale de la rainure. Ce type de rainure ondulante est décrit dans le brevet EP2483087-B1 auquel il est fait référence notamment pour les figures contenues dans ce brevet cité.

La largeur maximale de la cavité cachée 32 est égale à 5 mm et sa hauteur est égale à 6 mm.

Afin de faciliter le moulage et le démoulage de cette rainure ondulante 3, il est en outre formé une incision 4 s'étendant entre chaque cavité cachée 32 et chaque partie de liaison 33 avec la surface de roulement à neuf 10. L'incision 4 a une largeur égale à 0.6 mm et est délimitée par des parois aptes à venir au moins partiellement en contact l'une contre l'autre dans les conditions d'usage.

Chaque partie cachée 32 comprend deux parois latérales en vis-à-vis ces parois latérales étant reliées entre elles par une partie inférieure formant le fond radialement à l'intérieur et par une partie supérieure radialement à l'extérieur. La partie supérieure est divisée en deux parties se prolongeant par des parois délimitant l'incision 4.

Dans le but d'améliorer le faciès de l'usure radialement au-dessus des cavités cachées et ainsi atteindre une usure plus régulière sur l'ensemble de la surface de roulement, il est formé sur la partie supérieure de chaque cavité cachée une pluralité de fines nervures 35 orientées dans le cas présent pour faire un angle de 90 degrés avec la direction principale de la rainure 3, cette direction principale correspondant à la direction de l'écoulement de l'eau dans la rainure 3 lors d'un roulage par temps de pluie.

Ces fines nervures 35 se prolongent sur une faible hauteur h (égale ici à 1.5 mm) sur les parois délimitant en largeur chaque cavité cachée 32. Ces fines nervures 35 sont disposées parallèlement les unes aux autres avec un pas égal à 6 mm.

Après usure partielle de la bande, et avant même que la cavité cachée devienne une rainure ouverte sur la surface de roulement de la bande de roulement, l'ajout de matière lié à la présence de ces fines nervures génère une rigidification localisée au voisinage de la cavité ce qui permet d'obtenir un faciès d'usure plus régulier.

Les exemples décrits ne sauraient limiter l'invention et diverses modifications peuvent y être apportés par la personne du métier sans sortir du cadre de l'invention tel que défini par les revendications.

## Revendications

1. Bande de roulement (1) pour pneu de véhicule poids lourd ayant une épaisseur totale 5 correspondant à l'épaisseur de matière à user en roulage, cette bande de roulement (1) ayant à neuf une surface de roulement (10) destinée à venir en contact avec une chaussée lors du roulage, cette bande de roulement (1) comprenant au moins une cavité cachée (2) destinée à former une nouvelle rainure s'ouvrant sur la surface de roulement (10) après une usure partielle prédéterminée, cette au moins une cavité cachée (2) comprenant deux parois latérales (21, 22) en vis-à-vis reliées entre elles par un fond (23) radialement vers l'intérieur et par une partie sommitale (24) radialement vers l'extérieur, la bande de roulement (1) étant **caractérisée en ce que** la partie sommitale (24) de l'au moins une cavité cachée (2) est pourvue d'une pluralité de fines nervures (25) dont la hauteur s'étend radialement vers l'intérieur de l'au moins une cavité cachée (2) à partir de la partie sommitale (24) délimitant l'au moins une cavité cachée (2).

2. Bande de roulement (1) selon la revendication 1 **caractérisée en ce que** ces fines nervures (25) s'étendent selon une direction faisant un angle au moins égal à 40 degrés avec la direction principale de l'au moins une cavité cachée (2), la direction principale d'une cavité cachée (2) étant la direction de plus grande dimension de la cavité cachée (2) et correspondant à la direction d'écoulement d'un liquide à l'intérieur de cette cavité cachée (2) lorsqu'elle est ouverte sur la surface de roulement (10) et forme une nouvelle rainure.

3. Bande de roulement (1) selon la revendication 1 ou la revendication 2 **caractérisée en ce que** les fines nervures (25) formées sur la partie sommitale (24) délimitant l'au moins une cavité cachée (2) ont une hauteur maximale t au moins égale à 1 mm et au plus égale à 5 mm.

4. Bande de roulement (1) selon l'une quelconque des revendications 1 à 3 **caractérisée en ce que** les fines nervures (25) formées sur la partie sommitale (24) délimitant l'au moins une cavité cachée (2) sont orientées avec un angle proche ou égal à 90 degrés avec la direction principale de l'au moins une cavité cachée (2), la direction principale d'une cavité cachée (2) étant la direction de plus grande dimension de la cavité cachée (2) et correspondant à la direction d'écoulement d'un liquide à l'intérieur de cette cavité cachée (2) lorsqu'elle est ouverte sur la surface de roulement (10) et forme une nouvelle rainure.

5. Bande de roulement (1) selon l'une quelconque des revendications 1 à 4 **caractérisée en ce que** l'au moins une cavité cachée (2) est prolongée radialement jusqu'à la surface de roulement (10) à neuf par une incision (4).

6. Bande de roulement (1) selon la revendication 5 **caractérisée en ce que** la partie sommitale (24) de l'au moins une cavité cachée (2) comprend de chaque côté de l'incision (4) une face plane (241, 242) inclinée d'un angle G plus grand que zéro et au plus égal à 45 degrés, cet angle G étant mesuré par rapport à une direction parallèle à la direction transversale.

7. Bande de roulement (1) selon l'une quelconque des revendications 1 à 6 **caractérisée en ce que** les fines nervures (25) se prolongent sur une partie d'au moins une des parois latérales (21, 22) délimitant l'au moins une cavité cachée (2).

8. Bande de roulement (1) selon la revendication 7 **caractérisée en ce que** la hauteur h sur laquelle ces fines nervures (25) s'étendent le long d'au moins une des parois latérales (21, 22) est au moins égale à 1.5 mm.

9. Bande de roulement (1) selon la revendication 8 **caractérisée en ce que** la hauteur h sur laquelle ces fines nervures (25) s'étendent le long d'au moins une des parois latérales (21, 22) est au plus égale à 3 mm.

## Patentansprüche

1. Laufstreifen (1) für einen Lastkraftwagenreifen mit einer Gesamtdicke, die der Dicke von sich während der Fahrt abnutzendem Material entspricht, wobei der Laufstreifen (1) im Neuzustand eine Lauffläche (10) aufweist, die dazu bestimmt ist, während der Fahrt mit einer Fahrbahn in Kontakt zu kommen, wobei der Laufstreifen (1) zumindest einen verborgenen Hohlraum (2) umfasst, der dazu bestimmt ist, eine neue Rille auszubilden, die sich nach einer vorbestimmten Teilabnutzung zur Lauffläche (10) hin öffnet, wobei der zumindest eine verborgene Hohlraum (2) zwei einander gegenüberliegende Seitenwände (21, 22) umfasst, die radial nach innen durch einen Boden (23) und radial nach außen durch einen Scheitelteil (24) verbunden sind, wobei der Laufstreifen (1) **dadurch gekennzeichnet ist, dass** der Scheitelteil (24) des zumindest einen verborgenen Hohlraums (2) mit mehreren feinen Rippen (25) versehen ist, deren Höhe sich vom Scheitelteil (24), der den zumindest einen verborgenen Hohlraum (2) begrenzt, radial zum Inneren des zumindest einen verborgenen Hohlraums (2) erstreckt.

2. Laufstreifen (1) nach Anspruch 1, **dadurch gekennzeichnet, dass** sich die feinen Rippen (25) in einer Richtung erstrecken, die mit der Hauptrichtung des zumindest einen verborgenen Hohlraums (2) einen Winkel von mindestens 40 Grad ausbildet, wobei die Hauptrichtung eines verborgenen Hohlraums (2) die Richtung der größten Abmessung des verborgenen Hohlraums (2) ist und der Fließrichtung einer Flüssigkeit innerhalb des verborgenen Hohlraums (2) entspricht, wenn dieser zur Lauffläche (10) hin offen ist und eine neue Rille ausbildet.

3. Laufstreifen (1) nach Anspruch 1 oder Anspruch 2 **dadurch gekennzeichnet, dass** die am Scheitelteil (24) ausgebildeten feinen Rippen (25), die den zumindest einen verborgene Hohlraum (2) begrenzen, eine maximale Höhe t von mindestens 1 mm und höchstens 5 mm aufweisen.

4. Laufstreifen (1) nach einem der Ansprüche 1 bis 3, **dadurch gekennzeichnet, dass** die am Scheitelteil (24) ausgebildeten feinen Rippen (25), die den zumindest einen verborgenen Hohlraum (2) begrenzen, in einem Winkel nahe oder gleich 90 Grad zur Hauptrichtung des zumindest einen verborgenen Hohlraums (2) ausgerichtet sind, wobei die Hauptrichtung eines verborgenen Hohlraums (2) die Richtung der größten Abmessung des verborgenen Hohlraums (2) ist und der Fließrichtung einer Flüssigkeit innerhalb des verborgenen Hohlraums (2) entspricht, wenn dieser zur Lauffläche (10) hin offen ist und eine neue Rille ausbildet.

5. Laufstreifen (1) nach einem der Ansprüche 1 bis 4, **dadurch gekennzeichnet, dass** der zumindest eine verborgene Hohlraum (2) im Neuzustand durch einen Einschnitt (4) radial bis zur Lauffläche (10) verlängert ist.

6. Laufstreifen (1) nach Anspruch 5, **dadurch gekennzeichnet, dass** der Scheitelteil (24) des zumindest einen verborgenen Hohlraums (2) auf jeder Seite des Einschnitts (4) eine ebene Fläche (241, 242) umfasst, die unter einem Winkel G geneigt ist, der größer als Null und höchstens gleich 45 Grad ist, wobei der Winkel G in Bezug auf eine zur Querrichtung parallele Richtung gemessen wird.

7. Laufstreifen (1) nach einem der Ansprüche 1 bis 6, **dadurch gekennzeichnet, dass** sich die feinen Rippen (25) über einen Teil zumindest einer der Seitenwände (21, 22), die den zumindest einen verborgenen Hohlraum (2) begrenzen, verlängern.

8. Laufstreifen (1) nach Anspruch 7, **dadurch gekennzeichnet, dass** die Höhe h, über die sich die feinen Rippen (25) entlang zumindest einer der Seitenwände (21, 22) erstrecken, mindestens 1,5 mm beträgt.

9. Laufstreifen (1) nach Anspruch 8, **dadurch gekennzeichnet, dass** die Höhe h, über die sich die feinen Rippen (25) entlang zumindest einer der Seitenwände (21, 22) erstrecken, höchstens 3 mm beträgt.

## Claims

1. Tread (1) for a heavy-duty vehicle tyre having a total thickness corresponding to the thickness of material to be worn away during running, this tread (1) having, in the new state, a tread surface (10) intended to come into contact with a roadway when running, this tread (1) comprising at least one hidden cavity (2) intended to form a new groove opening onto the tread surface (10) after a predetermined amount of partial wear, this at least one hidden cavity (2) comprising two opposite lateral walls (21, 22) connected together by a bottom (23) radially towards the inside and by a crown part (24) radially towards the outside, the tread (1) being **characterized in that** the crown part (24) of the at least one hidden cavity (2) is provided with a plurality of fine ribs (25), the height of which extends radially towards the inside of the at least one hidden cavity (2) from the crown part (24) delimiting the at least one hidden cavity (2).

2. Tread (1) according to Claim 1, **characterized in that** these fine ribs (25) extend in a direction that makes an angle at least equal to 40 degrees with the main direction of the at least one hidden cavity (2), the main direction of a hidden cavity (2) being the direction of the largest dimension of the hidden cavity (2) and corresponding to the direction of flow of a liquid inside this hidden cavity (2) when it is open onto the tread surface (10) and forms a new groove.

3. Tread (1) according to Claim 1 or Claim 2, **characterized in that** the fine ribs (25) formed on the crown part (24) delimiting the at least one hidden cavity (2) have a maximum height t at least equal to 1 mm and at most equal to 5 mm.

4. Tread (1) according to any one of Claims 1 to 3, **characterized in that** the fine ribs (25) formed on the crown part (24) delimiting the at least one hidden cavity (2) are oriented at an angle close or equal to 90 degrees to the main direction of the at least one hidden cavity (2), the main direction of a hidden cavity (2) being the direction of the largest dimension of the hidden cavity (2) and corresponding to the direction of flow of a liquid inside this hidden cavity (2) when it is open onto the tread surface (10) and forms a new groove.

5. Tread (1) according to any one of Claims 1 to 4, **characterized in that** the at least one hidden cavity (2) is continued radially as far as the tread surface (10) in the new state by a sipe (4).

6. Tread (1) according to Claim 5, **characterized in that** the crown part (24) of the at least one hidden cavity (2) comprises, on each side of the sipe (4), a flat face (241, 242) inclined at an angle G greater than zero and at most equal to 45 degrees, this angle G being measured with respect to a direction parallel to the transverse direction.

7. Tread (1) according to any one of Claims 1 to 6, **characterized in that** the fine ribs (25) continue on a part of at least one of the lateral walls (21, 22) delimiting the at least one hidden cavity (2).

8. Tread (1) according to Claim 7, **characterized in that** the height h over which these fine ribs (25) extend along at least one of the lateral walls (21, 22) is at least equal to 1.5 mm.

9. Tread (1) according to Claim 8, **characterized in that** the height h over which these fine ribs (25) extend along at least one of the lateral walls (21, 22) is at most equal to 3 mm.
